Europäisches Patentamt

**European Patent Office**

**Office européen des brevets**

(11) Numéro de publication: **0 288 109 B1**

# FASCICULE DE BREVET EUROPEEN

(45) Date de publication de fascicule du brevet: **19.01.94**  (51) Int. Cl.⁵: **C08F 4/649**, C08F 10/00

(21) Numéro de dépôt: **88200690.1**

(22) Date de dépôt: **12.04.88**

---

(54) **Procédé pour la polymérisation stéréospécifique des alpha-oléfines et système catalytique utilisable pour cette polymérisation.**

---

(30) Priorité: **24.04.87 FR 8705896**

(43) Date de publication de la demande:
**26.10.88 Bulletin 88/43**

(45) Mention de la délivrance du brevet:
**19.01.94 Bulletin 94/03**

(84) Etats contractants désignés:
**AT BE CH DE ES FR GB GR IT LI NL SE**

(56) Documents cités:
**EP-A- 0 170 881**
**EP-A- 0 196 585**
**US-A- 3 362 916**

(73) Titulaire: **SOLVAY (Société Anonyme)**
**Rue du Prince Albert, 33**
**B-1050 Bruxelles(BE)**

(72) Inventeur: **Fiasse, Paul**
**Rond Point de l'Etoile, 5/21**
**B-1050 Bruxelles(BE)**

(74) Mandataire: **Husemann, Claude et al**
**SOLVAY**
**Département de la Propriété Industrielle**
**310, Rue de Ransbeek**
**B-1120 Bruxelles (BE)**

Rank Xerox (UK) Business Services
(3.10/3.09/3.3.3)

**Description**

La présente invention concerne un procédé pour la polymérisation stéréospécifique des alpha-oléfines, et un système catalytique utilisable pour cette polymérisation.

Il est connu de polymériser stéréospécifiquement les alphaoléfines telles que le propylène au moyen d'un système catalytique comprenant un constituant solide à base de trichlorure de titane et un activateur constitué d'un composé organométallique tel qu'un chlorure d'alkylaluminium.

Dans le brevet BE-A-780758 (SOLVAY & Cie), on a décrit des complexes catalytiques solides superactifs à base de TiCl$_3$ de porosité interne élevée, permettant d'obtenir des polymères du propylène de très bonne stéréorégularité.

Un souci constant des fabricants de polyoléfines demeure l'amélioration de la productivité de leurs installations de polymérisation.

Un des moyens d'atteindre cet objectif réside dans la mise au point de systèmes catalytiques encore plus actifs dont l'utilisation permet, à productivité catalytique donnée, de diminuer leur temps de séjour dans les installations de polymérisation ou de réduire le volume de ces dernières.

La présente invention vise à cet effet à fournir un procédé de polymérisation effectué en présence d'un système catalytique plus actif et, dans certaines conditions de polymérisation, plus stéréospécifique que ceux de l'art antérieur.

La présente invention concerne dès lors un procédé pour la polymérisation des alpha-oléfines effectuée en présence d'un système catalytique comprenant :

(a) un constituant (a) qui est un solide à base de trichlorure de titane complexé;

(b) un constituant (b) qui est un composé organométallique de métaux des groupes IA, IIA, IIB et IIIB du Tableau Périodique et, en outre,

(c) un constituant (c) qui est un composé oxygéné organique du silicium,

caractérisé en ce que le constituant (a) résulte d'un traitement d'activation préalable consistant à mettre le solide en contact avec un agent d'activation choisi parmi les produits de la réaction d'un composé organoaluminique avec un composé choisi parmi les composés hydroaromatiques dont le groupe hydroxyle est stériquement bloqué.

On préfère généralement utiliser, comme solide à base de trichlorure de titane complexé n'ayant pas subi de traitement d'activation préalable, un solide obtenu par un procédé impliquant une réduction initiale d'un composé (1) du titane choisi parmi les tétrahalogénures, les tétrahydrocarbyloxydes et leurs mélanges. A titre d'exemples de tétrahalogénures de titane, on peut citer les tétraiodure, tétrabromure et tétrachlorure. A titre d'exemples de tétrahydrocarbyloxydes de titane, on peut citer les tétraalkoxydes tels que les tétraméthoxy-, tétraisopropoxy- et tétra- n-butoxytitanes; les tétraaryloxydes, tels que les tétraphénoxy-, tétracrésoxy- et tétranaphtoxytitanes par exemple.

Parmi les composés (1) mentionnés ci-dessus, on préfère les tétrahalogénures de titane et, parmi ces derniers, le tétrachlorure de titane.

La réduction peut être opérée à l'intervention d'hydrogène ou de métaux tels que le magnésium et, de préférence, l'aluminium, en particulier lorsque le composé (1) est un tétrahalogénure de titane. On préfère toutefois effectuer la réduction du composé (1) à l'intervention d'un réducteur organométallique, qui peut être par exemple un réducteur organomagnésien.

Les meilleurs résultats sont obtenus lorsque l'on opère la réduction du composé (1) à l'intervention de réducteurs organoaluminiques (2).

Les réducteurs organoaluminiques utilisables de préférence sont les composés qui contiennent au moins un radical hydrocarboné fixé directement sur l'atome d'aluminium. Des exemples de composés de ce type sont les mono-, di- et trialkylaluminiums dont les radicaux alkyles contiennent de 1 à 12, et de préférence de 1 à 6 atomes de carbone, tels le triéthylaluminium, les isoprénylaluminiums, l'hydrure de diisobutylaluminium et l'éthoxydiéthylaluminium. Avec les composés de ce type, les meilleurs résultats sont obtenus avec les chlorures d'alkylaluminium, en particulier avec le chlorure de diéthylaluminium et avec le sesquichlorure d'éthylaluminium.

Les solides réduits mentionnés ci-dessus sont ensuite soumis à un traitement au moyen d'au moins un agent complexant qui est choisi en général parmi les composés organiques comprenant un ou plusieurs atomes ou groupements présentant une ou plusieurs paires d'électrons libres susceptibles d'assurer la coordination avec les atomes de titane ou d'aluminium présents dans les composés de titane (1) ou d'aluminium (2). De préférence, l'agent complexant est choisi dans la famille des éthers aliphatiques, et plus particulièrement parmi ceux dont les radicaux aliphatiques comprennent de 2 à 8 atomes de carbone, de préférence 4 à 6 atomes de carbone. Un exemple typique d'éther aliphatique donnant de très bons résultats est l'éther diisoamylique.

Ces traitements au moyen d'agents complexants, propres à stabiliser ou à améliorer la productivité et/ou la stéréospécificité des solides catalytiques sont bien connus et ont été amplement décrits dans la littérature.

Ainsi, le traitement au moyen de l'agent complexant peut consister en un broyage du solide réduit en présence de l'agent complexant. Il peut consister en un traitement thermique du solide réduit en présence de l'agent complexant. Il peut aussi consister en des lavages extractifs du solide réduit, en présence de solvants mixtes comprenant un composé hydrocarboné liquide et un solvant auxiliaire polaire, par exemple un éther. On peut aussi effectuer la réduction du composé de titane, en particulier du tétrachlorure, avec le réducteur organoaluminique (2), en présence de l'agent complexant, par exemple en ajoutant au tétrachlorure de titane une solution hydrocarbonée du produit de la réaction de l'agent complexant avec ce réducteur, et soumettre ensuite le solide réduit ainsi obtenu à un traitement thermique en l'absence d'agent complexant ou en présence d'une nouvelle quantité d'agent complexant, identique ou différent du précédent. On peut aussi effectuer le traitement au moyen de l'agent complexant avec une quantité de ce dernier suffisante pour former une solution homogène de solide à base de trichlorure de titane et reprécipiter par chauffage le solide ainsi dissous.

Le traitement au moyen de l'agent complexant peut être combiné avec ou suivi d'un traitement d'activation. Ces traitements d'activation sont également bien connus et ont également été décrits dans la littérature. Ils sont effectués en général au moyen d'au moins un agent choisi parmi les composés halogénés inorganiques, les composés halogénés organiques, les composés interhalogénès et les halogènes. Parmi ces agents, on peut citer :

- à titre de composés halogénés inorganiques, les halogénures de métaux et de non métaux, tels que les halogénures de titane et de silicium par exemple;
- à titre de composés halogénés organiques, les hydrocarbures halogénés tels que les alkanes halogénés et les tétrahalogénures de carbone par exemple;
- à titre de composés interhalogénés, les chlorure et bromure d'iode par exemple;
- à titre d'halogène, le chlore, le brome et l'iode.

Des exemples d'agents convenant très bien pour le traitement d'activation sont le tétrachlorure de titane, le tétrachlorure de silicium, l'iodobutane, le monochloréthane, l'hexachloréthane, le chlorméthylbenzène, le tétrachlorure de carbone, le chlorure d'iode et l'iode. Les meilleurs résultats ont été obtenus avec le tétrachlorure de titane.

La forme physique sous laquelle se trouvent les agents complexants et les agents utilisés pour l'éventuel traitement d'activation n'est pas critique pour la préparation du précurseur. Ces agents peuvent être mis en oeuvre sous forme gazeuse, ou sous forme liquide, cette dernière étant la forme la plus usuelle sous laquelle ils se présentent dans les conditions habituelles de température et de pression. On peut aussi effectuer le traitement au moyen de l'agent complexant et l'éventuel traitement d'activation en présence d'un diluant hydrocarboné inerte, généralement choisi parmi les hydrocarbures aliphatiques, cycloaliphatiques et aromatiques liquides, tels que les alkanes et isoalkanes liquides et le benzène.

Des détails relatifs aux conditions opératoires des traitements de complexation et d'activation les plus courants peuvent être trouvés notamment dans le brevet BE-A-864708 (SUMITOMO CHEMICAL COMPANY LTD), dans le brevet US-A-4295991 (EXXON RESEARCH AND ENGINEERING CO) et dans les documents cités dans ce dernier.

A un moment quelconque de sa préparation, après l'étape de réduction ou de complexation, ou après l'éventuelle étape d'activation, mais de préférence après l'étape de réduction, le constituant (a) peut être soumis à un traitement visant à diminuer la friabilité de ses particules constitutives. Ce traitement, appelé "prépolymérisation", consiste à mettre le solide en contact avec une alpha-monooléfine inférieure, telle que l'éthylène ou, mieux, le propylène, dans des conditions polymérisantes de manière à obtenir un solide contenant en général entre 5 et 500 % en poids environ d'alpha-monooléfine "prépolymérisée". Cette "prépolymérisation" peut s'effectuer avantageusement au sein d'une suspension du solide dans le diluant hydrocarboné inerte tel que défini plus haut pendant une durée suffisante pour obtenir la quantité souhaitée d'alpha-monooléfine prépolymérisée sur le solide. Le constituant (a) obtenu selon cette variante est moins friable et permet d'obtenir des polymères de bonne morphologie même lorsqu'on polymérise à température relativement élevée.

En outre, à un moment quelconque de sa préparation, mais de préférence après l'étape d'activation quand on procède à cette dernière, le solide à base de trichlorure de titane complexé est soumis à un traitement d'activation supplémentaire visant à maintenir la stabilité de ses propriétés et/ou visant à augmenter sa stéréospécificité. Ce traitement d'activation supplémentaire consiste à mettre ce solide, de préférence séparé du milieu dans lequel il a été préparé et lavé par un diluant hydrocarboné inerte tel que défini plus haut, en contact avec un agent d'activation choisi parmi les produits de la réaction d'un compose organoaluminique avec un composé choisi parmi les composés hydroxyaromatiques dont le groupe hydroxyle est stériquement bloqué. Le compose organoaluminique est choisi de préférence parmi les trialkylaluminiums et les chlorures d'alkylaluminium. Parmi ces composés, les meilleurs résultats ont été obtenus avec le triéthylaluminium et le chlorure de diéthylaluminium. Le composé hydroxyaromatique dont le groupe hydroxyle est stériquement bloqué est choisi de préférence parmi les phénols di-tert-alkylés dans les positions ortho par rapport aux groupes hydroxyles et les esters de l'acide 3-(3',5'-di-tert-butyl-4'-hydroxyphényl)propionique. Parmi ces composés, les meilleurs résultats ont été obtenus avec le 3-(3',5'di-tert-butyl-4'-hydroxyphényl)propionate de n-octadécyle et avec le 2,6-di-tert-butyl-4-méthyl-phénol.

On trouvera d'autres détails en rapport avec le traitement d'activation supplémentaire défini ci-dessus, notamment avec la nature des composés organoaluminiques et hydroxyaromatiques et avec les conditions opératoires dans lesquelles on l'effectue, dans la demande de brevet français déposée le 26 septembre 1986 sous le numéro 86.13649 (SOLVAY & Cie).

Une méthode de préparation préférée du solide à base de trichlorure de titane complexé conduisant au constituant (a) entrant dans la composition du système catalytique utilisable selon l'invention a été décrite dans le brevet BE-A-780758 (SOLVAY & Cie). Cette méthode comprend la réduction du tétrachlorure de titane au moyen d'un réducteur organoaluminique qui, en l'occurrence, est de préférence un chlorure de dialkylaluminium dont les chaînes alkyles comprennent de 2 à 6 atomes de carbone, dans des conditions douces. Après un éventuel traitement thermique du solide réduit ainsi obtenu, on soumet ce dernier à un traitement au moyen d'un agent complexant tel que défini plus haut. Enfin, on opère un traitement au moyen de tétrachlorure de titane et on sépare le solide à base de trichlorure de titane complexé ainsi formé que l'on lave généralement au moyen d'un diluant hydrocarboné inerte tel que défini plus haut, choisi de préférence parmi les hydrocarbures aliphatiques liquides comprenant de 3 à 12 atomes de carbone et qui est d'ailleurs le diluant qui peut être utilisé tout au long de la préparation dudit solide.

La méthode de préparation préférée définie dans le paragraphe précédent conduit à des particules de solide à base de trichlorure de titane complexé qui sont également décrites dans le brevet BE-A-780758. Ces particules sont sphériques et ont en général un diamètre compris entre 5 et 100 microns et le plus souvent entre 10 et 50 microns. Elles sont constituées d'un aggloméré de microparticules également sphériques qui ont un diamètre compris entre 0,05 et 1 micron, le plus souvent entre 0,1 et 0,3 micron et qui sont extrêmement poreuses. Il en résulte que les particules présentent une surface spécifique supérieure à 75 m$^2$/g et se situant le plus souvent entre 100 et 250 m$^2$/g et une porosité totale supérieure à 0,15 cm$^3$/g et comprise la plupart du temps entre 0,20 et 0,35 cm$^3$/g. La porosité interne des microparticules constitue la contribution la plus importante à cette porosité totale des particules, comme l'atteste la valeur élevée du volume poreux correspondant aux pores de moins de 200 Å de diamètre, qui est supérieur à 0,11 cm$^3$/g et la plupart du temps compris entre 0,16 et 0,31 cm$^3$/g.

Les solides à base de trichlorure de titane complexé obtenus selon la méthode de préparation décrite dans le brevet BE-A-780758 en choisissant les conditions opératoires préférées répondent à la formule :

$$TiCl_3 . (AlRCl_2)x . Cy$$

où R est un radical alkyle comprenant de 2 à 6 atomes de carbone, C est un agent complexant tel que défini plus haut, x est un nombre quelconque inférieur à 0,20 et y un nombre quelconque supérieur à 0,009 et en général inférieur à 0,20.

A titre de variante de cette méthode de préparation, on peut citer celle, mentionnée plus haut, consistant à "prépolymériser" le solide réduit, après l'éventuel traitement thermique et avant le traitement au moyen de l'agent complexant, avec une alphamonooléfine inférieure (propylène) dans des conditions polymérisantes. Cette "prépolymérisation" s'effectue au sein d'une suspension du solide réduit dans le diluant hydrocarboné inerte tel que défini plus haut, entre 20 et 80°C environ, pendant une durée comprise généralement entre 1 minute et 1 heure.

Le solide à base de trichlorure de titane complexé est ensuite soumis à un traitement d'activation supplémentaire par introduction d'une solution du produit de la réaction du composé organoaluminique et du composé hydroxyaromatique dans une suspension hydrocarbonée du solide à base de trichlorure de titane complexé maintenue ensuite à une température comprise de préférence entre 20 et 40°C environ pour une durée comprise de préférence entre 15 et 90 minutes.

Quelle que soit la variante retenue pour la préparation du constituant (a) et comme mentionné plus haut, ce dernier est finalement séparé de son milieu de formation et généralement lavé ensuite au moyen d'un diluant hydrocarboné inerte de même nature que ceux à l'intervention desquels il a éventuellement été préparé.

Le constituant (a) du système catalytique utilisable selon l'invention, séparé et lavé, peut être ensuite éventuellement séché de manière conventionnelle.

Après avoir été lavé et éventuellement séché, le constituant (a) du système catalytique selon l'invention peut être immédiatement remis en contact avec un diluant hydrocarboné inerte tel que ceux qui ont été définis plus haut et qui sont aussi utilisables comme diluants dans la polymérisation en suspension. Il peut être stocké dans un tel diluant ou sous forme sèche, de préférence à froid, pendant des périodes longues, sans perdre ses qualités.

Pour la polymérisation, le système catalytique selon l'invention contient, outre le constituant (a) mentionné ci-dessus, un constituant (b) qui est choisi parmi les composés organométalliques de métaux des groupes IA, IIA, IIB et IIIB du Tableau Périodique (version publiée dans Kirk-Othmer Encyclopedia of Chemical Technology, second complete revised edition, volume 8, 1965, page 94) et de préférence parmi les composés de formule :

$$Al\ R'_m\ Y_{3-m}$$

où
- R' est un radical hydrocarboné contenant de 1 à 18 atomes de carbone et de préférence de 1 à 12 atomes de carbone choisi parmi les radicaux alkyle, aryle, arylalkyle, alkylaryle et cycloalkyle; les meilleurs résultats sont obtenus lorsque R' est choisi parmi les radicaux alkyle contenant de 2 à 6 atomes de carbone;
- Y est un halogène choisi parmi le fluor, le chlore, le brome et l'iode; les meilleurs résultats sont obtenus lorsque Y est le chlore;
- m est un nombre quelconque tel que $0 < m \leq 3$ et de préférence tel que $1,5 \leq m \leq 2,5$; les meilleurs résultats sont obtenus lorsque m est égal à 2.

Le chlorure de diéthylaluminium (DEAC) assure une activité et une stéréospécificité maximales du système catalytique.

Outre le constituant (a) et le constituant (b), le système catalytique selon l'invention comprend un constituant (c) qui est choisi parmi les composés oxygénés organiques du silicium.

Par composé oxygéné organique du silicium, on entend désigner tous les composés contenant du silicium, de l'oxygène et un radical hydrocarboné dans leur molécule. A titre de composés oxygénés organiques du silicium utilisables selon l'invention, on peut citer :
- les esters silylés d'acides carboxyliques, tels que l'acétate de silyle, par exemple;
- les silicates d'alkyle, tels que les silicates d'éthyle et de butyle, par exemple;
- les siloxanes substitués par des groupes alkyle et alkoxy, tels que les hexaméthyldisiloxane et diméthyltétraéthoxydisiloxane, par exemple;
- les dérivés aromatiques de silanols, tels que le triphénylsilanol et le diphénylsilanediol, par exemple.

On préfère toutefois choisir les composés oxygénés organiques du silicium parmi les dérivés hydrocarboxylés du silane, c'est-à-dire les dérivés du silane dont la molécule comprend au moins un groupement hydrocarbyloxy.

Ces dérivés peuvent être représentés par la formule générale :

$$R''_n\ Si(OR''')_{4-n}$$

dans laquelle :
- R'' représente un atome d'hydrogène, un atome d'halogène ou un radical hydrocarboné contenant de 1 à 18 atomes de carbone, de préférence de 1 à 8 atomes de carbone, choisi par exemple parmi les radicaux alkyle, cycloalkyle, alkényle, aryle, alkylaryle et arylalkyle, pouvant eux-mêmes porter des substituants tels que des halogènes, des groupements amino, etc.; de préférence, R'' est choisi parmi les radicaux aryle et les radicaux alkyle;
- R''' représente un radical hydrocarboné contenant de 1 à 12 atomes de carbone, de préférence de 1 à 6 atomes de carbone, identique à ou différent de R'', choisi par exemple parmi les radicaux alkyle, cycloalkyle, alkényle, aryle, alkylaryle et arylalkyle, pouvant eux-mêmes être substitués par des groupements alkoxy, etc.; de préférence, R''' est choisi parmi les radicaux alkyle et les radicaux aryle;
- n est est nombre tel que $0 \leq n \leq 3$, de préférence tel que $1 \leq n \leq 2$.

Les composés dans lesquels les $nR''$ et $(4-n)R'''$ représentent chacun des radicaux de nature différente entrent également dans le cadre de l'invention.

Des exemples de composés oxygénés organiques du silicium répondant à la formule générale ci-dessus sont les triéthoxysilane, tétraéthoxysilane, triméthylméthoxysilane, triméthyléthoxysilane, diméthyldi-

méthoxysilane, diméthyldiéthoxysilane, diphényldiméthoxysilane, méthylphényldiméthoxysilane, diphényl-diéthoxysilane, méthyltriméthoxysilane, phényltriméthoxysilane, gamma-chloropropyltriméthoxysilane, méthyltriéthoxysilane, éthyltriéthoxysilane, vinyltriéthoxysilane, butyltriéthoxysilane, phényltriéthoxysilane, gamma-aminopropyltriéthoxysilane, chlorotriéthoxysilane, éthyltriisopropoxysilane, diéthoxyméthylvinylsilane, vi-nyltriméthoxysilane, triméthylphénoxysilane, méthyltriallyloxysilane, vinyltris($\beta$-méthoxyéthoxy)silane, vinyl-triacétoxysilane, triméthoxysilane.

Des composés oxygénés organiques tout particulièrement préférés sont les trialkoxyarylsilanes et les dialkoxydiarylsilanes, dont des exemples typiques sont le triéthoxyphénylsilane et le diphényldiméthoxysilane.

Les systèmes catalytiques comprenant les constituants (a), (b) et (c) ainsi définis s'appliquent à la polymérisation des oléfines à insaturation terminale dont la molécule contient de 2 à 18 et de préférence de 2 à 6 atomes de carbone telles que l'éthylène, le propylène , le butène-1, le pentène-1, les méthylbutène-1, l'hexène-1, les 3- et 4-méthylpentènes-1 et le vinylcyclohexène. Ils sont particulièrement intéressants pour la polymérisation stéréospécifique du propylène , du butène-1 et du 4-méthylpentène-1 en polymères cristallins, fortement isotactiques. Ils s'appliquent également à la copolymérisation de ces alpha-oléfines entre elles ainsi qu'avec des dioléfines comprenant de 4 à 18 atomes de carbone. De préférence, les dioléfines sont des dioléfines aliphatiques non conjuguées telles que l'hexadiène-1,4, des dioléfines monocycliques non conjuguées telles que le 4-vinylcyclohexène, des dioléfines alicycliques ayant un pont endocyclique telles que le dicyclopentadiène, le méthylène- et l'éthylènenorbornène et des dioléfines aliphatiques conjuguées telles que le butadiène ou l'isoprène.

Ils s'appliquent encore à la fabrication de copolymères appelés à blocs qui sont constitués à partir d'alpha-oléfines et de dioléfines. Ces copolymères à blocs consistent en des successions de segments de chaîne à longueurs variables; chaque segment consiste en un homopolymère d'une alpha-oléfine ou en un copolymère statistique comprenant une alpha-oléfine et au moins un comonomère choisi parmi les alpha-oléfines et les dioléfines. Les alpha-oléfines et les dioléfines sont choisies parmi celles mentionnées ci-dessus.

Les systèmes catalytiques selon l'invention conviennent particulièrement bien pour la fabrication d'homopolymères du propylène et de copolymères contenant au total au moins 50 % en poids de propylène et de préférence 75 % en poids de propylène.

La polymérisation peut être effectuée selon n'importe quel procédé connu : en solution ou en suspension dans un solvant ou un diluant hydrocarboné inerte, tel que ceux définis en rapport avec la préparation du constituant (a) et qui est de préférence choisi parmi le butane, le pentane, l'hexane, l'heptane, le cyclohexane, le méthylcyclohexane ou leurs mélanges. On peut également opérer la polymérisation dans le monomère ou un des monomères maintenu à l'état liquide ou encore en phase gazeuse.

L'utilisation des systèmes catalytiques selon l'invention est très avantageuse pour la polymérisation en phase gazeuse. Dans la mesure, en effet, où l'apparition de sous-produits amorphes et collants est particulièrement nuisible dans ce type de polymérisation, dont la technologie n'en permet pas l'élimination, l'utilisation de systèmes catalytiques plus stéréospécifiques y est spécialement intéressante. On a constaté que les systèmes catalytiques selon l'invention satisfont à cette condition.

La température de polymérisation est choisie généralement entre 20 et 200°C et de préférence entre 50 et 90°C, les meilleurs résultats étant obtenus entre 65 et 85°C. La pression est choisie généralement entre la pression atmosphérique et 50 atmosphères et de préférence entre 10 et 40 atmosphères. Cette pression est bien entendu fonction de la température utilisée.

La polymérisation peut être effectuée en continu ou en discontinu.

La préparation des copolymères dits à blocs peut se faire également selon des procédés connus. On préfère utiliser un procédé en deux étapes consistant à polymériser une alpha-oléfine, généralement le propylène , selon la méthode décrite précédemment pour l'homopolymérisation. Ensuite, on polymérise l'autre alpha-oléfine et/ou dioléfine, généralement l'éthylène, en présence de la chaîne homopolymère encore active. Cette seconde polymérisation peut se faire après avoir enlevé complètement ou partiellement le monomère n'ayant pas réagi au cours de la première étape.

Le constituant (a), le constituant (b) et le constituant (c) qui composent le système catalytique selon l'invention sont de préférence ajoutés séparément au milieu de polymérisation.

On peut toutefois également effectuer un précontact du constituant (a) avec le constituant (b),
du constituant (a) avec le constituant (c),
du constituant (b) avec le constituant (c), ou encore
des trois constituants entre eux
avant de les introduire dans le milieu de polymérisation, précontact généralement effectué à une température comprise entre -40 et 80°C, pendant une durée qui est dépendante de cette température et qui peut aller de quelques minutes à plusieurs heures, voire plusieurs jours.

Le précontact du constituant (a) avec le ou les constituant(s) (b) et (c) peut s'effectuer par exemple en mettant le constituant (a), suspendu dans le diluant hydrocarboné ayant servi à le préparer, en présence d'une solution dans ce diluant du ou des constituant(s) (b) et (c).

Le précontact du constituant (b) avec le constituant (c) peut s'effectuer en mettant en présence des solutions de ces constituants dans un diluant hydrocarboné tels que ceux mentionnés plus haut; la formation d'un produit de réaction ou d'un complexe au cours de ce précontact entre les constituants (a) et (b) n'est pas exclue et est généralement sans effet négatif sur les propriétés du système catalytique.

La quantité de constituant (a) mise en oeuvre est déterminée en fonction de sa teneur en TiCl$_3$. Elle est choisie en général de manière que la concentration du milieu de polymérisation soit supérieure à 0,01 mmole de TiCl$_3$ par litre de diluant, de monomère liquide ou de volume de réacteur et de préférence supérieure à 0,05 mmole par litre.

La quantité totale de constituant (b) mise en oeuvre n'est pas critique; elle est en général supérieure à 0,1 mmole par litre de diluant, de monomère liquide, ou de volume de réacteur, de préférence supérieure à 0,5 mmole par litre.

La quantité totale de constituant (c) mise en oeuvre n'est pas davantage critique; on préfère toutefois ne pas mettre en oeuvre une quantité de constituant (c) excédentaire par rapport à la quantité totale de constituant (b), parce que l'on a constaté que cela nuisait à l'activité catalytique.

Le rapport des quantités de constituant (b) et de constituant (a) n'est pas critique non plus. On le choisit généralement de manière que le rapport atomique entre le métal présent dans le constituant (b) et le titane présent dans le constituant (a) soit compris entre 0,5 et 20 atome-gramme/atome-gramme (at.g/at.g) et de préférence entre 1 et 15 at.g/at.g. Les meilleurs résultats sont obtenus lorsque ce rapport atomique est compris entre 2 at.g/at.g et 12 at.g/at.g.

Le rapport des quantités de constituant (c) et de constituant (b), exprimé en atome-gramme de silicium présent dans le constituant (c) par atome-gramme de métal présent dans le constituant (b) est généralement compris entre 0,001 et 5, de préférence entre 0,005 et 1. Les meilleurs résultats sont obtenus lorsque ce rapport est compris entre 0,01 et 0,2.

Le poids moléculaire des polymères fabriqués selon le procédé de l'invention peut être réglé par l'addition au milieu de polymérisation d'un ou plusieurs agents de réglage du poids moléculaire comme l'hydrogène , le diéthylzinc, les alcools, les éthers et les halogénures d'alkyle.

L'activité des sytèmes catalytiques selon l'invention est plus élevée que celle des systèmes catalytiques binaires décrits dans le brevet BE-A-780758 lorsqu'ils contiennent le même solide à base de trichlorure de titane complexé. Ainsi, lors de l'homopolymérisation du propylène dans le monomère liquide, l'utilisation des systèmes catalytiques selon l'invention peut conduire aisément, dans ces conditions, à une augmentation d'activité pouvant atteindre 15 %. Cette augmentation d'activité peut même atteindre 50 %, lorsqu'on effectue la polymérisation en phase gazeuse, sans perte notable de stéréospécificité.

Les exemples suivants servent à illustrer l'invention.

Dans ces exemples, les symboles utilisés ont la signification suivante :

α = activité catalytique exprimée conventionnellement en grammes de polymère insoluble dans le milieu de polymérisation, obtenus par heure et par gramme de TiCl$_3$ contenu dans le solide catalytique. Cette activité est appréciée indirectement à partir de la teneur résiduaire en titane du polymère par fluorescence X.

G = module de rigidité en torsion du polymère, mesuré à 100°C et pour un angle de torsion de 60° d'arc, la température du moule étant fixée à 70°C et la durée de conditionnement à 5 minutes (normes BS 2782 - part I - method 150A; ISO 458/1, méthode B; DIN 53447 et ASTM D 1043). Ce module est exprimé en daN/cm$^2$.

MFI = indice de fluidité en fondu mesuré sous une charge de 2,16 kg à 230°C et exprimé en g/10 min. (norme ASTM D 1238).

PSA = poids spécifique apparent de la fraction de polymère insoluble, mesuré par tassement et exprimé en g/l.

I.I = indice d'isotacticité du polymère, apprécié par la fraction de ce dernier, exprimée en % par rapport à la quantité totale de polymère solide recueilli, qui est insoluble dans l'heptane bouillant.

Exemples 1 à 3 et exemple comparatif 4R

A. Préparation du constituant (a)

1. Réduction

Dans un réacteur de 800 ml équipé d'un agitateur à 2 pales tournant à 400 tours/min., on introduit sous atmosphère d'azote 140 ml d'hexane sec et 60 ml de TiCl₄ pur. Cette solution hexaneTiCl₄ est refroidie à 0 (+ 1)°C. Endéans 4 h on y additionne une solution constituée de 190 ml d'hexane et de 70 ml de chlorure de diéthylaluminium (DEAC) en maintenant la température de 0 (± 1)°C dans le réacteur.

Après addition de la solution DEAC-hexane, le milieu de réaction constitué par une suspension de fines particules est maintenu sous agitation à 1 (± 1)°C pendant 15 min., puis est porté en 1 h à 25°C et maintenu 1 h à cette température et ensuite porté en 1 h environ à 65°C. Le milieu est maintenu sous agitation pendant 2 h à 65°C.

2. Prépolymérisation

Le milieu est ensuite refroidi à environ 58°C. On introduit alors, dans le ciel gazeux du réacteur, du propylène sous une pression de 2 bars. Cette introduction est poursuivie pendant le temps suffisant (environ 45 minutes) pour obtenir, par kg de solide, 70 g de propylène polymérisé. La suspension du solide ainsi "prépolymérisé" est ensuite refroidie à 40°C. La phase liquide est séparée du solide, le produit solide est lavé 7 fois au moyen de 200 ml d'hexane sec, avec remise en suspension du solide lors de chaque lavage.

3. Traitement avec l'agent complexant

Le solide réduit "prépolymèrisé" est remis en suspension dans 456 ml d'hexane et on y ajoute 86 ml d'éther diisoamylique (EDIA). La suspension est agitée pendant 1 heure à 50°C. Ensuite, le solide ainsi traité est séparé de la phase liquide.

4. Traitement d'activation avec TiCl₄

Le solide traité est remis en suspension dans 210 ml d'hexane et on y ajoute 52 ml de TiCl₄; la suspension est maintenue sous agitation (150 tours/min.) à 70°C pendant 2 h. La phase liquide est ensuite éliminée par filtration et le solide à base de trichlorure de titane complexé est lavé 14 fois avec 270 ml d'hexane.

5. Activation supplémentaire

Dans un réacteur de 800 ml équipé d'un agitateur à pales tournant à 150 tours/min., on introduit 70 g du solide à base de trichlorure de titane complexé (contenant environ 780 g de TiCl₃/kg) suspendu dans 280 ml d'hexane. On introduit lentement (30 minutes) dans ce réacteur 114 ml d'une solution dans l'hexane d'un agent d'activation ("préactivateur") préalablement préparé en mélangeant, par litre d'hexane, 80 g de DEAC (composé (1)) et 176,2 g de 3-(3′,5′-di-tert-butyl-4′-hydroxyphényl)propionate de n-octadécyle commercialisé sous la dénomination Irganox 1076 par Ciba-Geigy (composé (2)). Le rapport molaire entre les composés (1) et (2) mis en oeuvre pour préparer le "préactivateur" est donc de 2, et le rapport molaire entre le "préactivateur" et le solide à base de trichlorure de titane complexé (exprimé en mole de composé (1) initialement mis en oeuvre par mole de TiCl₃ présent dans le solide) vaut 0,2.

La solution de "préactivateur" n'est introduite dans le réacteur que 15 minutes après le terme du dégagement gazeux observé au cours du mélange du composé (1) et du composé (2).

La suspension ainsi additionnée du "préactivateur" est maintenue pendant 1 heure à 30°C sous agitation.

Après décantation, le constituant (a) résultant est lavé 5 fois au moyen de 100 ml d'hexane sec, avec remise en suspension du solide lors de chaque lavage, et conservé en suspension dans l'hexane à la concentration de 250 g/l.

Le constituant (a) ainsi obtenu contient, par kg, 681 g de TiCl₃, 10 g d'aluminium et 43 g d'EDIA.

B. Polymérisation du proyplène en suspension dans le monomère liquide en présence du constituant (a)

Dans un autoclave du 5 l, préalablement séché et maintenu sous atmosphère d'azote sec, on introduit, sous balayage d'azote, dans l'ordre indiqué :

- 400 mg de DEAC (sous forme d'une solution dans l'hexane à 80 g/l) commercialisé par la firme Schering (le rapport atomique Cl/Al est ajusté à 1,02 par addition de dichlorure d'éthylaluminium);
- la quantité, indiquée au Tableau 1 ci-après, de phényltriéthoxysilane (PTS) commercialisé par la firme Janssen Chimica, sous forme d'une solution $66,4.10^{-6}$ molaire dans l'hexane (exemples 1 à 3);
- 100 mg du constituant (a) tel que préparé en A ci-dessus (le rapport molaire entre le DEAC et le $TiCl_3$ présent dans ce constituant vaut ainsi environ 8);
- de l'hydrogène sous pression partielle de 1 bar (exemple 2 : 0,8 bar);
- 3 l de propylène liquide.

On maintient le réacteur à 70°C sous agitation pendant 3 heures. Ensuite, on dégaze le propylène excédentaire et on récupère le polypropylène (PP) formé.

Les conditions particulières des essais de polymérisation et leurs résultats sont consignés au Tableau 1 ci-après.

Tableau 1

| EXEMPLE | 1 | 2 | 3 | 4R |
|---|---|---|---|---|
| Quantité de PTS introduite (ml) | 1 | 2,5 | 5 | - |
| Rapport Si/Al dans le milieu de polymérisation (at.g/at.g) | 0,02 | 0,05 | 0,1 | - |
| Quantité de PP recueillie (g) <br> $\alpha$ (g PP/g $TiCl_3$ x h) | 961 <br> 4704 | 1007 <br> 4928 | 919 <br> 4500 | 881 <br> 4312 |
| I.I (%) | 96,9 | 97,0 | 97,0 | 97,1 |
| PSA (g/l) | 513 | 512 | 514 | 512 |
| MFI (g/10 min) | 15 | 11,2 | 9,2 | 12 |
| G (daN/cm$^2$) | 732 | 713 | 710 | 704 |

Les résultats de ces exemples montrent clairement l'influence bénéfique de la présence du composé oxygéné organique du silicium (PTS) dans le milieu de polymérisation du propylène sur l'activité ($\alpha$) du système catalytique.

Exemple 5

Dans le même autoclave qu'à l'exemple 1, partie B et dans les mêmes conditions opératoires, on introduit, outre le DEAC et le constituant (a), préparé comme à l'exemple 1, partie A, 1 ml d'une solution $66,4.10^{-6}$ molaire dans l'hexane de diphényldiméthoxysilane commercialisé par la firme Sharpe Chemicals Co.

Après introduction dans l'autoclave des autres ingrédients du milieu de polymérisation (dans lequel le rapport Si/Al vaut 0,02 at.g/at.g), on réalise un essai de polymérisation comme indiqué à l'exemple 1, partie B. Cet essai permet de recueillir 940 g de PP. L'activité catalytique s'élève à 4600 g PP/g $TiCl_3$ x h. Ce PP est caractérisé par un I.I de 96,5 %, un MFI de 4,9 g/10 min, un G de 648 daN/cm$^2$ et un PSA de 509 g/l.

Exemples comparatifs 6R et 7R

On prépare un constituant (a) comme indiqué aux exemples 1 à 3, point A sauf que, pour l'activation supplémentaire 5, on remplace le "préactivateur" par 17 ml d'une solution à 250 g/l de DEAC dans l'hexane. Le rapport molaire entre le DEAC et le $TiCl_3$ présent dans le solide vaut 0,1.

La suspension, additionnée de la solution de DEAC introduite en 30 minutes, est maintenue 15 minutes à 20°C.

La préparation du constituant (a) est terminée comme indiqué aux exemples 1 à 3.

Le constituant (a) obtenu contient, par kg, 752 g de $TiCl_3$, 9,3 g d'aluminium et 66 g d'EDIA.

Les essais de polymérisation sont effectués selon les conditions générales mentionnées aux exemples 1 à 3 ci-dessus, sauf que, pour l'essai de l'exemple 6R, on remplace le PTS par une solution de même molarité de triéthoxysilane [$HSi(OC_2H_5)_3$] (TS) fourni par la firme Janssen Chimica.

Les conditions particulières des essais de polymérisation et leurs résultats sont consignés au Tableau 2 ci-après.

Tableau 2

| EXEMPLE | 6R | 7R |
|---|---|---|
| Quantité de TS introduite (ml) | 5 | - |
| Rapport Si/Al dans le milieu de polymérisation (at.g/at.g) | 0,1 | - |
| Quantité de PP recueillie (g) | 1015 | 898 |
| (g PP/g $TiCl_3$ x h) | 4500 | 3980 |
| I.I (%) | 96,1 | 96,1 |
| PSA (g/l) | 505 | 513 |
| MFI (g/10 min) | 5 | 3,9 |
| G ($daN/cm^2$) | 645 | 616 |

Exemples comparatifs 8R à 13R

On prépare un constituant (a) comme indiqué aux exemples 1 à 3, point A, sauf que l'on omet l'étape 2 (prépolymérisation) et que l'on remplace l'étape 5 par un séchage du solide lavé, comme décrit au point B de l'exemple 1 du brevet BE-A-846911 (SOLVAY & Cie).

Le solide à base de trichlorure de titane complexé ainsi obtenu, qui contient 880 g de $TiCl_3$ par kg, est mis en oeuvre dans un essai de polymérisation du propylène comprenant une première étape effectuée dans le monomère liquide et une seconde étape effectuée en phase gazeuse dans les conditions opératoires détaillées ci-après.

Dans l'autoclave de 5 l utilisé selon les exemples 1 à 3, on introduit sous courant d'azote :
- du DEAC,
- la quantité, indiquée au Tableau ci-après, de PTS (exemple 8R (de comparaison)) ou de tétraéthoxysilane (TES) fourni par la firme Janssen Chimica (exemple 9R (de comparaison)),
- 100 mg de constituant (a).
(Le rapport molaire DEAC/$TiCl_3$ dans l'autoclave est ajusté de manière à valoir environ 10).

On réalise dans l'autoclave une pression absolue d'hydrogène de 0,2 bar. Puis, on introduit sous agitation 2 l de propylène liquide et on chauffe l'autoclave à 60°C. On polymérise 30 min. à cette température. On dégaze l'autoclave ensuite à une pression de 15 bars en le chauffant en même temps à 75°C. On y réalise ensuite une pression absolue d'hydrogène de 1 bar, puis on introduit du propylène dans l'autoclave jusqu'à atteindre une pression totale à la température considérée de 25 bars. Après 3 heures, on arrête la polymérisation par dégazage du propylène.

Pour la réalisation de l'exemple 10R (de comparaison), on effectue un essai de polymérisation dans les conditions générales décrites plus haut, mais en n'introduisant pas de composé oxygéné organique du silicium dans l'autoclave.

Pour la réalisation des exemples 12R et 13R (de comparaison), on effectue également des essais de polymérisation du propylène dans les conditions générales décrites plus haut, mais en remplaçant le constituant (a) par un catalyseur commercial obtenu par rèduction de $TiCl_4$ par l'aluminium et broyage du produit résultant (catalyseur commercialisé par la firme Kronos sous la dénomination ATR et contenant environ 800 g/kg de $TiCl_3$).

Enfin, pour la réalisation de l'exemple 11R (de comparaison), on effectue un essai de polymérisation dans les conditions générales décrites plus haut, avec le catalyseur commercial utilisé pour la réalisation des exemples 12R et 13R, mais en n'introduisant pas de composé oxygéné organique du silicium dans l'autoclave.

Les conditions particulières des essais de polymérisation et leurs résultats sont consignés au Tableau 3 ci-après.

Tableau 3

| EXEMPLE | 10R | 8R | 9R | 11R | 12R | 13R |
|---|---|---|---|---|---|---|
| Solide à base de trichlorure de titane utilisé | constituant (a) n'ayant pas subi traitement d'activation prealable | | | produit Kronos ATR | | |
| Composé oxygéné organique du silicium utilisé | - | PTS | TES | - | PTS | TES |
| Quantité de PTS ou de TES introduite (exprimée par le rapport Si/Al dans le milieu de polymérisation) (at.g/at.g) | - | 0,05 | 0,05 | - | 0,05 | 0,05 |
| $\alpha$ (g PP/g TiCl$_3$ x h) | 1722 | 2688 | 1950 | 806 | 739 | 612 |
| I.I (%) | 96,3 | 96,0 | 94,6 | 91,6 | 87,9 | 89,7 |
| PSA (g/l) | 520 | 504 | 519 | 425 | 429 | 433 |
| MFI (g/10 min) | 4,5 | 3,1 | 2,5 | 6,8 | 5,5 | 3,8 |
| G (daN/cm$^2$) | 608 | 595 | 541 | 636 | 558 | 546 |

Exemple 14

On prépare un constituant (a) comme indiqué aux exemples 1 à 3, point A, et on le met en oeuvre dans un essai de polymérisation du propylène effectué comme indiqué aux exemples 8R et 9R, le composé oxygéné organique étant le PTS, comme à l'exemple 8R.

On obtient, avec une activité $\alpha$ de 3833, un PP dont le I.I. est 98,2 %, le MFI est 3,2 g/10 min, le G vaut 695 daN/cm$^2$ et le PSA 519 g/l.

**Revendications**

1. Procédé pour la polymérisation des alpha-oléfines effectué en présence d'un système catalytique comprenant :
   - un constituant (a) qui est un solide à base de trichlorure de titane complexé ;
   - un constituant (b) qui est un composé organométallique de métaux des groupes IA, IIA, IIB et IIIB du Tableau Périodique ;
   - un constituant (c) qui est un composé oxygéné organique du silicium ;
   caractérisé en ce que le constituant (a) résulte d'un traitement d'activation préalable consistant à mettre le solide en contact avec un agent d'activation choisi parmi les produits de la réaction d'un composé organoaluminique avec un composé choisi parmi les composés hydroxyaromatiques dont le groupe hydroxyle est stériquement bloqué.

2. Procédé suivant la revendication 1, caractérisé en ce que l'agent d'activation est choisi parmi les produits de la réaction d'un composé organoaluminique choisi parmi les trialkylaluminiums et les chlorures d'alkylaluminium avec un composé hydroxyaromatique choisi parmi les phénols di-tert-alkylés dans les positions ortho par rapport aux groupes hydroxyles et les esters de l'acide 3-(3',5'-di-tert-butyl-4'hydroxyphényl)propi-onique.

3. Procédé suivant les revendications 1 et 2, dans lequel le constituant (a) est séparé de son milieu de formation.

4. Procédé suivant les revendications 1 à 3, dans lequel le composé oxygéné organique du silicium correspond à la formule générale :

$$R_n^{''} \, Si(OR''')_{4-n}$$

dans laquelle :
- R'' représente un atome d'hydrogène, un atome d'halogène ou un radical hydrocarboné contenant de 1 à 18 atomes de carbone,
- R''' représente un radical hydrocarboné contenant de 1 à 12 atomes de carbone ;
- n est un nombre tel que $0 \leq n \leq 3$.

5. Procédé suivant les revendications 1 à 4, dans lequel le composé oxygéné organique du silicium est choisi parmi les alkoxyarylsilanes.

6. Procédé suivant les revendications 1 à 5, dans lequel le rapport entre la quantité de silicium présente dans le composé (c) et la quantité de métal présent dans le composé organométallique (b) est compris entre 0,005 et 1 atome-gramme/atomegramme.

7. Procédé suivant les revendications 1 à 6, dans lequel le solide à base de trichlorure de titane complexé répond à la formule :

$$TiCl_3 . (AlRCl_2)_x . C_y$$

dans laquelle :
- R est un radical alkyle comprenant de 2 à 6 atomes de carbone,
- C est un agent complexant choisi parmi les éthers aliphatiques,
- x est un nombre quelconque inférieur à 0,20, et
- y est un nombre quelconque supérieur à 0,009.

8. Procédé suivant les revendications 1 à 7, appliqué à la polymérisation du propylène.

9. Procédé suivant les revendications 1 à 8, appliqué à la polymérisation du propylène en phase gazeuse.

10. Système catalytique, utilisable pour la polymérisation des alpha-oléfines, comprenant :
- un constituant (a) qui est un solide à base de trichlorure de titane complexé ;
- un constituant (b) qui est un composé organométallique de métaux des groupes IA, IIA, IIB et IIIB du Tableau Périodique ;
- un constituant (c) qui est un composé oxygéné organique du silicium ;
caractérisé en ce que le constituant (a) résulte d'un traitement d'activation préalable consistant à mettre le solide en contact avec un agent d'activation choisi parmi les produits de la réaction d'un composé organoaluminique avec un composé choisi parmi les composés hydroxyaromatiques dont le groupe hydroxyle est stériquement bloqué.

## Claims

1. Process for the polymerization of alpha-olefins performed in the presence of a catalytic system comprising :
- a constituent (a) which is a solid based on complexed titanium trichloride;
- a constituent (b) which is an organometallic compound of metals of groups IA, IIA, IIB and IIIB of the Periodic Table;
- a constituent (c) which is an oxygen-containing organic silicon compound;
characterized in that the constituent (a) results from a prior activation treatment consisting in bringing the solid into contact with an activating agent chosen from the products of the reaction of an organoaluminium compound with a compound chosen from hydroxy aromatic compounds in which the hydroxyl group is sterically blocked.

2. Process according to Claim 1, characterized in that the activating agent is chosen from the products of the reaction of an organoaluminium compound chosen from trialkylaluminiums and alkylaluminium chlorides with a hydroxy aromatic compound chosen from phenols which are di-tert-alkylated in the ortho positions with respect to the hydroxyl groups, and 3-(3',5'-di-tert-butyl-4'-hydroxyphenyl)propionic acid esters.

12

3. Process according to Claims 1 and 2, in which the constituent (a) is separated from the medium in which it is formed.

4. Process according to Claims 1 to 3, in which the oxygen-containing organic silicon compound corresponds to the general formula:

$$R_n'' \, Si(OR''')_{4-n}$$

in which:
- R'' denotes a hydrogen atom, a halogen atom or a hydrocarbon radical containing from 1 to 18 carbon atoms,
- R''' denotes a hydrocarbon radical containing from 1 to 12 carbon atoms,
- n is a number such that $0 \leq n \leq 3$.

5. Process according to Claims 1 to 4, in which the oxygen-containing organic silicon compound is chosen from alkoxyarylsilanes.

6. Process according to Claims 1 to 5, in which the ratio of quantity of silicon present in the compound (c) to the quantity of metal present in the organometallic compound (b) is between 0.005 and 1 gram-atom/gram-atom.

7. Process according to Claims 1 to 6, in which the solid based on complexed titanium trichloride corresponds to the formula:

$$TiCl_3 \cdot (AIRCl_2)_x \cdot C_y$$

in which:
- R is an alkyl radical comprising 2 to 6 carbon atoms,
- C is a complexing agent chosen from aliphatic ethers,
- x is any number smaller than 0.20, and
- y is any number larger than 0.009.

8. Process according to Claims 1 to 7, applied in the polymerization of propylene.

9. Process according to Claims 1 to 8, applied in the polymerization of propylene in the vapour phase.

10. Catalytic system which is usable for the polymerization of alpha-olefins, comprising:
- a constituent (a) which is a solid based on complexed titanium trichloride;
- a constituent (b) which is an organometallic compound of metals of groups IA, IIA, IIB and IIIB of the Periodic Table;
- a constituent (c) which is an oxygen-containing

**Patentansprüche**

1. Verfahren zur Polymerisation der Alpha-Olefine, durchgeführt in Anwesenheit eines katalytischen Systems, das
- eine Komponente (a), die ein fester Stoff auf der Basis von komplexiertem Titantrichlorid ist;
- eine Komponente (b), die eine organometallische Verbindung von Metallen der Gruppen IA, IIA, IIB, IIIB der Tabelle des Periodischen Systems ist;
- eine Komponente (c), die eine organische, sauerstoffhaltige Verbindung des Siliciums ist; umfaßt, dadurch gekennzeichnet, daß die Komponente (a) aus einer vorherigen Aktivierungsbehandlung resultiert, die darin besteht, den festen Stoff in Kontakt zu bringen mit einem Aktivierungsmittel, ausgewählt unter den Produkten der Reaktion einer Organoaluminium-Verbindung, mit einer Verbindung, ausgewählt unter den hydroxyaromatischen Verbindungen, deren Hydroxylgruppe sterisch blockiert ist.

2. Verfahren nach Anspruch 1, dadurch gekennzeichnet, daß das Aktivierungsmittel ausgewählt ist unter den Produkten der Reaktion einer Organoaluminium-Verbindung, ausgewählt unter den Trialkylaluminiums und den Alkylaluminiumchloriden, mit einer hydroxyaromatischen Verbindung, ausgewählt unter den in den Ortho-Positionen bezogen auf die Hydroxylgruppen di-tert-alkylierten Phenolen und den Estern der 3-(3',5'-Di-tert-butyl-4'hydroxyphenyl)propionsäure.

3. Verfahren nach den Ansprüchen 1 und 2, bei dem die Komponente (a) von seinem Bildungsmedium getrennt wird.

4. Verfahren nach den Ansprüche 1 bis 3, bei dem die organische, sauerstoffhaltige Verbindung des Siliciums der allgemeinen Formel:

$$R''_nSi(OR''')_{4-n}$$

entspricht, in der:
- R'' ein Wasserstoffatom, ein Halogenatom oder einen Kohlenwasserstoffrest mit 1 bis 18 Kohlenstoffatomen darstellt;
- R''' einen Kohlenwasserstoffrest mit 1 bis 12 Kohlenstoffatomen darstellt;
- n eine Zahl von $0 \leqq n \leqq 3$ darstellt.

5. Verfahren nach einem der Ansprüche 1 bis 4, bei dem die organische, sauerstoffhaltige Verbindung des Siliciums ausgewählt ist unter den Alkoxyarylsilanen.

6. Verfahren nach den Ansprüchen 1 bis 5, bei dem das Verhältnis zwischen der in der Verbindung (c) anwesenden Menge an Silicium und der Menge des in der organometallischen Verbindung (b) anwesenden Metalls zwischen 0,005 und 1 Atomgramm/Atomgramm beträgt.

7. Verfahren nach den Ansprüchen 1 bis 6, bei dem der feste Stoff auf der Basis von komplexiertem Titantrichlorid der Formel:

$$TiCl_3.(AlRCl_2)_x.C_y$$

entspricht, in der:
- R ein Alkylrest mit 2 bis 6 Kohlenstoffatomen ist;
- C ein Komplexierungsmittel ausgewählt unter den aliphatischen Ethern ist;
- x eine beliebige Zahl kleiner als 0,20 und
- y eine beliebige Zahl größer als 0,009 ist.

8. Verfahren gemäß den Ansprüchen 1 bis 7, das zur Polymerisation des Propylens verwendet wird.

9. Verfahren gemäß den Ansprüchen 1 bis 8, das zur Polymerisation des Propylens in gasförmiger Phase verwendet wird.

10. Katalytisches System das für die Polymerisation der Alpha-Olefine verwendbar ist, umfassend:
- eine Komponente (a), die ein fester Stoff auf der Basis von komplexiertem Titantrichlorid ist;
- eine Komponente (b), die eine organometallische Verbindung von Metallen der Gruppen IA, IIA, IIB, IIIB der Tabelle des periodischen Systems ist;
- eine Komponente (c), die eine organische, sauerstoffhaltige Verbindung des Siliciums ist;
dadurch gekennzeichnet, daß die Komponente (a) aus einer vorherigen Aktivierungsbehandlung resultiert, die darin besteht, den festen Stoff in Kontakt zu bringen mit einem Aktivierungsmittel, ausgewählt unter den Produkten der Reaktion einer Organoaluminium-Verbindung, mit einer Verbindung, ausgewählt unter den hydroxyaromatischen Verbindungen, deren Hydroxylgruppe sterisch blockiert ist.